# EUROPÄISCHE PATENTSCHRIFT

(11) **EP 1 857 262 B1**
(45) Veröffentlichungstag und Bekanntmachung des Hinweises auf die Patenterteilung: **13.05.2009**
(21) Anmeldenummer: 07104941.5
(22) Anmeldetag: 27.03.2007
(51) Int. Cl.: B29D 30/16, B29D 30/30, B60C 19/08

(54) **Verfahren zum Herstellen eines Fahrzeugluftreifens**
Method for producing a pneumatic tyre for a vehicle
Procédé de fabrication d'un pneu de véhicule

(30) Priorität: 16.05.2006 DE 102006022671
(43) Veröffentlichungstag der Anmeldung: 21.11.2007
(73) Patentinhaber: Continental Aktiengesellschaft, 30165 Hannover (DE)
(72) Erfinder: Jenke, Roland, 29693 Hademstorf (DE); Neumann, Axel, 31559 Hohnhorst (DE)

(56) Entgegenhaltungen:
- EP-A- 1 738 893
- EP-A2- 1 175 992

## Beschreibung

Die Erfindung betrifft ein Verfahren zum Herstellen eines Fahrzeugluftreifens, bei dem auf einer Reifenkarkasse, welche bereits mit dem Gürtelpaket versehen ist, der Laufstreifen durch spiraliges Wickeln eines mit einem leitfähigen Material versehenen Materialstreifens aus einer unvulkanisierten Kautschukmischung erstellt wird.

Da sich Fahrzeuge während des Fahrbetriebes elektrisch aufladen, ist für eine ausreichende Ableitung der elektrostatischen Ladungen Sorge zu tragen. Die mit der Fahrbahn in Kontakt stehenden Aufstandsflächen der Reifen müssen daher ausreichend leitfähig sein. Ist dies nicht der Fall, können unangenehme Entladungsvorgänge auftreten. Insbesondere bei kieselsäurehaltigen Laufstreifen, die den Reifen an sich gute Fahreigenschaften, wie einen geringen Rollwiderstand und gute Nass-Rutsch-Eigenschaften verleihen, ist deren niedrige elektrische Leitfähigkeit eine mischungsbedingte und nachteilige Eigenschaft.

Aus der DE 197 18 699 C1 ist ein Verfahren zum Herstellen eines Fahrzeugluftreifens bekannt, bei dem der Laufstreifen aus einem unvulkanisierten Materialstreifen hergestellt wird, welcher auf eine bombierte Reifenkarkasse, auf die bereits das Gürtelpaket aufgebracht ist, gewickelt wird. Der extrudierte Materialstreifen aus einer Kieselsäure enthaltenden Kautschukmischung wird durch ein Tauchbecken gezogen, in welchem sich eine Kautschuklösung befindet, die im vulkanisierten Zustand leitfähig ist. Durch den Materialstreifen werden im fertigen Reifen in Reifenquerrichtung zumindest zwei Zonen gebildet, deren Trennflächen in der Laufstreifenoberfläche münden, wobei die eine Zone im vulkanisierten Zustand einen spezifischen elektrischen Widerstand > 10⁸ Ω cm aufweist.

Bei dem aus der EP 1 175 992 A2 bekannten Verfahren wird eine elektrisch leitfähige Zone im Laufstreifen eines Fahrzeugluftreifens dadurch hergestellt, dass ein schmales Band aus einer elektrisch leitfähigen Mischung in mehreren spiraligen Wicklungen um den Reifenumfang aufgebracht wird. Die sonstigen Teile des Laufstreifens werden durch spiraliges Wickeln eines Materialstreifens aus einer unvulkanisierten, für Laufstreifen üblichen Gummimischung erstellt. Auch bei dem aus der EP 1 738 893 A1 bekannten Verfahren wird der Laufstreifen durch spiraliges und überlappendes Wickeln eines Materialstreifens aus einer Kautschukmischung erstellt. Der Materialstreifen ist dabei zumindest teilweise mit einer Lage aus einer elektrisch leitfähigen Kautschukmischung ummantelt.

Der Erfindung liegt die Aufgabe zu Grunde, auf eine einfachere und rationellere Weise eine leitfähige Schicht auf dem zur Herstellung des Laufstreifens vorgesehenen Materialstreifen zu erzeugen.

Gelöst wird die gestellte Aufgabe erfindungsgemäß dadurch, dass auf den Materialstreifen leitfähiger Staub oder leitfähiges Pulver, gegebenenfalls in einer Flüssigkeit suspendiert, aufgebracht wird.

Vorteilhafte Weiterbildungen der Erfindung sind Gegenstand der abhängigen Ansprüche.

Die Verwendung von leitfähigem Staub oder Pulver, unmittelbar oder als Suspension, stellt auf besonders zuverlässige Weise eine leitfähige Schicht auf dem den Laufstreifen bildenden Materialstreifen zur Verfügung, sodass im fertigen Reifen ein Ableiten elektrostatischer Aufladungen gewährleistet ist.

Als leitfähiges Material eignet sich besonders Graphitpulver oder Graphitstaub mit einer Teilchengröße von 2nm bis 200nm und einem elektrischen Widerstand von 10⁻⁵ Ωm bis 10⁻⁶ Ωm. Eine gute Alternative ist auch Rußpulver oder Rußstaub mit einer Teilchengröße von 10nm bis 60nm und einem elektrischen Widerstand von 10⁻³ Ωm bis 10⁻⁴ Ωm.

Wird eine Suspension verwendet, so eignet sich insbesondere Öl als Flüssigkeit. Eine Suspension auf Ölbasis kann auf einfache Weise durch Streichen, Sprühen oder Tauchen auf den Materialstreifen aufgebracht werden.

Wird das Pulver bzw. der Staub unmittelbar verwendet, kann ein Aufbringen auf den rohen und daher klebrigen Materialstreifen ebenfalls auf sehr einfache Weise durch Sprühen, Aufblasen oder ein Durchziehen des Materialstreifens durch eine mit dem Pulver bzw. dem Staub gefüllte Wanne oder dergleichen erfolgen.

Weitere Merkmale, Vorteile und Einzelheiten werden anhand der Zeichnung, welche schematisch ein Ausführungsbeispiel darstellt, näher beschrieben. Dabei zeigen
Fig. 1 den grundsätzlichen Aufbau einer Vorrichtung zum Aufbringen eines Laufstreifens auf einen Reifen und
Fig. 2 im Querschnitt den Laufstreifen eines Fahrzeugluftreifens vor der Vulkanisierung.

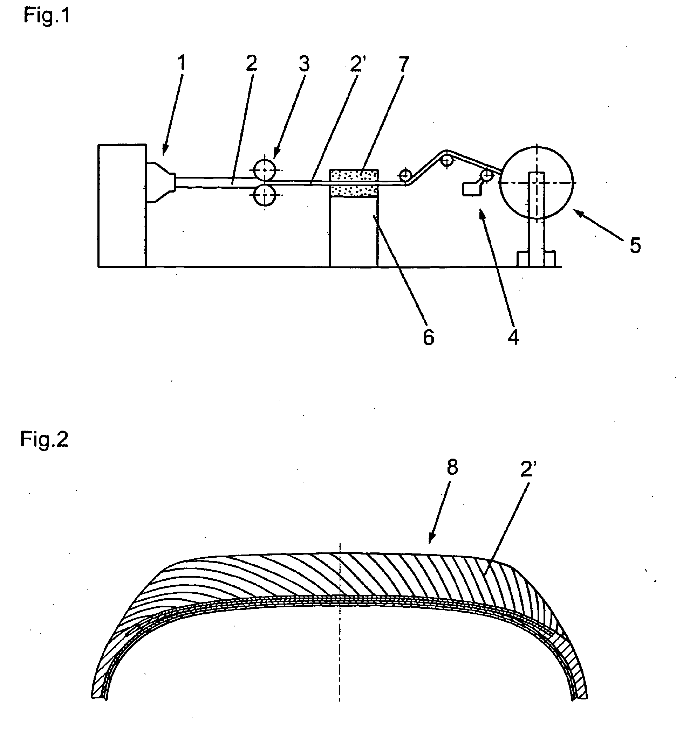

Die in Fig. 1 gezeigte Vorrichtung weist einen Extruder 1 auf, aus welchem ein Materialstrang 2 gefördert ist, der aufgrund des Extruder-Mundstückes einen runden Querschnitt aufweist. Der Materialstrang 2 besteht aus einer Kautschukmischung, welche als Füllstoff Kieselsäure (Silika) und höchstens einen geringen Anteil an Ruß enthält. Der Materialstrang 2 weist einen Durchmesser von etwa 1 cm auf und wird mittels eines Walzwerkes 3 zu einem Materialstreifen 2' umgeformt, welcher einen rechteckigen Querschnitt von beispielsweise 16mm x 2mm aufweist. Der Materialstreifen 2' wird anschließend allseitig mit einer dünnen Schicht aus einem elektrisch leitfähigen Material versehen, welches ein leitfähiges Pulver oder ein leitfähiger Staub ist oder solches bzw. solchen enthält. Das leitfähige Material ist vorzugsweise Graphitpulver oder Graphitstaub mit einer Teilchengröße von 2nm bis 200nm und einem elektrischen Widerstand von 10-⁵ Ωm bis 10-⁶ Ωm, oder Rußpulver bzw. Rußstaub mit einer Teilchengröße von 10nm bis 60nm und einem elektrischen Widerstand von 10-³ Ωm bis 10-⁴ Ωm. Bei der in Fig. 1 gezeigten Ausführungsvariante wird der Materialstreifen 2' durch eine Wanne 6, welche den Staub bzw. das Pulver 7 enthält, gezogen. Das Pulver bzw. der Staub 7 haftet gut auf dem unvulkanisierten und daher klebrigen Materialstreifen 2'. Alternativ dazu kann das Aufbringen des Staubes bzw. Pulvers 7 durch Aufblasen oder auf elektrostatische Weise erfolgen.

Das leitfähige Material - Graphitpulver/Graphitstaub oder Rußpulver/Rußstaub - kann auch als Suspension, beispielsweise in einem Öl verteilt, aufgebracht werden. Die Suspension kann auf dem Materialstreifen 2' durch Sprühen, Streichen oder Tauchen aufgebracht werden.

Der Materialstreifen 2' wird schließlich entsprechend programmgesteuert über einen beweglichen Auflagekopf 4 auf eine bereits mit dem Gürtelpaket, mit oder ohne Bandage, versehene und bombierte Reifenkarkasse 5 aufgewickelt bzw. aufgespult. Das Aufspulen des Materialstreifens 2' erfolgt vorzugsweise derart, dass die einzelnen Windungen unter gegenseitigen Überlappung von der einen Reifenschulter bis zur anderen Reifenschulter kontinuierlich gewickelt werden. Durch ein geeignetes Steuersystem ist es möglich, beim Wickeln die Laufstreifendicke zu beeinflussen oder mehrere Lagen zu wickeln, indem der Auflagekopf 4 von einer Seite zur anderen Seite entsprechend bewegt wird. Der aufgebrachte Materialstreifen 2' wird schließlich mittels einer nicht gezeigten Anrollvorrichtung angedrückt, der fertig aufgebaute Reifenrohling wird anschließend vulkanisiert.

Die aufgetragene Menge (Schichtstärke) an elektrisch leitfähigem Material - Pulver, Staub oder Suspension - wird derart bemessen, dass im fertigen Reifen der Oberflächenwiderstand des Laufstreifens kleiner als 10⁴ Ω ist.

Fig. 2 zeigt schematisch den aus einer Lage von überlappenden Wickelungen des Materialstreifens 2' gewickelten Laufstreifen 8.

Ein derart hergestellter Fahrzeugluftreifen gewährleistet eine sichere Ableitung elektrostatischer Ladungen durch die leitfähigen Schichten im Laufstreifen 8.

## Patentansprüche

1. Verfahren zum Herstellen eines Fahrzeugluftreifens, bei dem auf einer Reifenkarkasse (5), welche bereits mit dem Gürtelpaket versehen ist, der Laufstreifen (8) durch spiraliges Wickeln eines mit einem leitfähigen Material versehenen Materialstreifens (2') aus einer unvulkanisierten Kautschukmischung erstellt wird,
**dadurch gekennzeichnet,**
**dass** auf den Materialstreifen (2') leitfähiger Staub oder leitfähiges Pulver (7), gegebenenfalls in einer Flüssigkeit suspendiert, aufgebracht wird.

2. Verfahren nach Anspruch 1, **dadurch gekennzeichnet, dass** Graphitpulver oder Graphitstaub mit einer Teilchengröße von 2nm bis 200nm und einem elektrischen Widerstand von 10⁻⁵ Ωm bis 10⁻⁶ Ωm verwendet wird.

3. Verfahren nach Anspruch 1, **dadurch gekennzeichnet, dass** Rußpulver oder Rußstaub mit einer Teilchengröße von 10nm bis 60nm und einem elektrischen Widerstand von 10⁻³ Ωm bis 10⁻⁴ Ωm verwendet wird.

4. Verfahren nach einem der Ansprüche 1 bis 3, **dadurch gekennzeichnet, dass** das Pulver bzw. der Staub in Öl suspendiert ist.

5. Verfahren nach einem der Ansprüche 1 bis 3, **dadurch gekennzeichnet, dass** der Staub bzw. das Pulver (7) auf den Materialstreifen (2') gesprüht oder geblasen wird.

6. Verfahren nach einem der Anspruch 1 bis 3, **dadurch gekennzeichnet, dass** der Materialstreifen (2') durch den Staub bzw. das Pulver gezogen wird.

7. Verfahren nach einem der Anspruch 1 bis 3, **dadurch gekennzeichnet, dass** der Staub bzw. das Pulver elektrostatisch aufgebracht wird.

8. Verfahren nach einem der Ansprüche 1 bis 4, **dadurch gekennzeichnet, dass** die Suspension durch Streichen, Sprühen oder Tauchen auf den Materialstreifen (2') aufgebracht wird.

## Claims

1. Method for producing a pneumatic vehicle tyre, in which the tread rubber (8) is produced on a tyre carcass (5), which is already provided with the breaker belt package, by spirally winding a strip of material (2') which comprises an unvulcanized rubber mixture and is provided with a conductive material, **characterized in that** conductive dust or conductive powder (7), optionally suspended in a liquid, is applied to the strip of material (2').

2. Method according to Claim 1, **characterized in that** graphite powder or graphite dust with a particle size of from 2 nm to 200 nm and an electrical resistance of from 10⁻⁵ Ωm to 10⁻⁶ Ωm is used.

3. Method according to Claim 1, **characterized in that** carbon black powder or carbon black dust with a particle size of from 10 nm to 60 nm and an electrical resistance of from 10⁻³ Ωm to 10⁻⁴ Ωm is used.

4. Method according to one of Claims 1 to 3, **characterized in that** the powder or dust is suspended in oil.

5. Method according to one of Claims 1 to 3, **characterized in that** the dust or powder (7) is sprayed or blown onto the strip of material (2').

6. Method according to one of Claims 1 to 3, **characterized in that** the strip of material (2') is drawn through the dust or powder.

7. Method according to one of Claims 1 to 3, **characterized in that** the dust or powder is electrostatically applied.

8. Method according to one of Claims 1 to 4, **characterized in that** the suspension is applied to the strip of material (2') by brushing, spraying or immersion.

## Revendications

1. Procédé de fabrication d'un bandage pneumatique pour roue de véhicule, dans lequel on forme la bande de roulement (8) sur une carcasse (5) de bandage déjà dotée de l'ensemble de ceinture en enroulant en spirale une bande de matériau (2') en un mélange de caoutchouc non vulcanisé doté d'un matériau conducteur,
**caractérisé en ce que**
la poussière conductrice ou la poudre conductrice (7) est appliquée sur la bande de matière (2'), éventuellement en suspension dans un liquide.

2. Procédé selon la revendication 1, **caractérisé en ce que** l'on y utilise une poudre de graphite ou une poussière de graphite d'une granulométrie de 2 nm à 200 nm et dont la résistance électrique est comprise entre 10⁻⁵ Ω.m et 10⁻⁶ Ω.m .

3. Procédé selon la revendication 1, **caractérisé en ce qu'**on y utilise une poudre de noir de carbone ou une poussière de noir de carbone dont la granulométrie est comprise entre 10 nm et 60 nm et la résistance électrique entre 10⁻³ Ω.m et 10⁻⁴ Ω.m.

4. Procédé selon l'une des revendications 1 à 3, **caractérisé en ce que** la poudre ou la poussière sont mises en suspension dans de l'huile.

5. Procédé selon l'une des revendications 1 à 3, **caractérisé en ce que** la poussière ou la poudre (7) sont projetées ou soufflées sur la bande de matière (2').

6. Procédé selon l'une des revendications 1 à 3, **caractérisé en ce que** la bande de matière (2') est tirée à travers la poussière ou la poudre.

7. Procédé selon l'une des revendications 1 à 3, **caractérisé en ce que** la poussière ou la poudre sont appliquées par des moyens électrostatiques.

8. Procédé selon l'une des revendications 1 à 4, **caractérisé en ce que** la suspension est appliquée sur la bande de matière (2') par enduction, projection ou immersion.
